# FASCICULE DE BREVET EUROPEEN

(11) **EP 1 104 064 B1**
(45) Date de publication et mention de la délivrance du brevet: **04.07.2007**
(21) Numéro de dépôt: 00403045.8
(22) Date de dépôt: 02.11.2000
(51) Int. Cl.: H02B 1/46, B65D 55/16

(54) **Boîte munie d'organes de verrouillage du couvercle et comportant un lien de retenue du couvercle, notamment pour équipement électrique**
Gehäuse mit Verriegelungsvorrichtung für einen Deckel und Rückhaltesystem des Deckels, insbesondere für elektrische Geräte
Housing with cover latching arrangement and cover retention system, particularly for electrical equipment

(30) Priorité: 29.11.1999 FR 9915002
(43) Date de publication de la demande: 30.05.2001
(73) Titulaire: LEGRAND FRANCE, 87000 Limoges (FR); LEGRAND SNC, 87000 Limoges (FR)
(72) Inventeur: Nicolas, Yves, 87480 Saint Priest Taurion (FR)
(74) Mandataire: Santarelli

(56) Documents cités:
- FR-A- 1 541 586
- FR-A- 2 099 120

## Description

La présente invention concerne d'une manière générale les boîtes du genre comportant, de manière distincte, un corps de boîte, un couvercle, et, qu'il s'agisse par exemple d'axes quart de tour ou d'axes à visser, au moins deux organes de fermeture aptes à permettre de verrouiller le couvercle sur le corps de boîte.

De telles boîtes sont notamment mises en oeuvre pour le logement étanche d'un quelconque équipement électrique.

La présente invention vise plus particulièrement le cas où, à l'un au moins des organes de fermeture, est associé un lien de retenue apte à assurer une retenue du couvercle à distance du corps de boîte.

Une boîte comportant au moins un tel lien de retenue se trouve notamment décrite dans le brevet suisse No 470 598.

Grâce à ce lien de retenue, le couvercle est avantageusement rendu imperdable par rapport au corps de boîte.

Il reste donc attelé, en attente, au corps de boîte lors d'une intervention dans ce dernier, et l'opérateur procédant à cette intervention est ainsi sûr de l'avoir en permanence à sa disposition.

Mais, pour certaines interventions, au moins, il est au contraire souhaitable de pouvoir procéder à une dépose complète du couvercle par rapport au corps de boîte, et, donc, à une désolidarisation totale du lien de retenue par rapport à ce corps de boîte et/ou par rapport au couvercle.

Dans le brevet suisse No 470 598, dans lequel les organes de fermeture sont des axes à visser, un tel démontage est possible.

Mais il implique d'exercer sur celui ou ceux de ces organes de fermeture qui sont équipés d'un lien de retenue une action prolongée de dévissage, tout en tirant sur le couvercle.

Cette opération, qui conduit à une désolidarisation du ou des liens de retenue par rapport au corps de boîte, ce ou ces liens de retenue équipant alors en pratique à demeure le couvercle, est particulièrement longue et malaisée.

Il en est sensiblement de même dans divers types de boîtes développées (voir FR-A-2 099 120) depuis lors, dans lesquelles chacun des liens de retenue mis en oeuvre est d'un seul tenant avec l'organe de fermeture auquel il est associé.

La présente invention a d'une manière générale pour objet une disposition permettant de rendre particulièrement facile et rapide une dépose éventuelle du couvercle par rapport au corps de boîte, et conduisant en outre à d'autres avantages.

De manière plus précise, elle a pour objet une boîte du genre comportant un corps de boîte, un couvercle, et au moins deux organes de fermeture, qui sont aptes à permettre de verrouiller le couvercle sur le corps de boîte, et à l'un au moins desquels est associé un lien de retenue apte à assurer une retenue du couvercle à distance du corps de boîte, cette boîte étant d'une manière générale caractérisée en ce que le lien de retenue équipe à demeure le corps de boîte, avec, entre le lien de retenue et l'organe de fermeture auquel le lien de retenue est associé, des moyens de solidarisation débrayables.

Par exemple, ces moyens de solidarisation débrayables sont de simples moyens d'encliquetage comportant deux éléments d'encliquetage complémentaires, l'un sur le lien de retenue, l'autre sur l'organe de fermeture.

Quoi qu'il en soit, tout en assurant, lorsqu'ils sont mis en oeuvre, une liaison suffisamment ferme et sûre entre l'organe de fermeture et le lien de retenue, et, donc, entre le couvercle et le corps de boîte, ils permettent, si désiré, une désolidarisation du lien de retenue par rapport à l'organe de fermeture, et, donc, une dépose du couvercle par rapport au corps de boîte.

Il suffit, pour ce faire, d'agir en dégagement sur eux.

L'opération correspondante est particulièrement aisée et rapide.

En outre, la disposition suivant l'invention permet avantageusement d'éviter une rupture rédhibitoire du lien de retenue lorsque celui-ci vient à être l'objet d'une traction intempestive, tel que cela peut par exemple être le cas lorsque, le couvercle étant en attente, ce couvercle est lui-même inopportunément l'objet d'une quelconque sollicitation d'arrachement.

En effet, grâce aux moyens de solidarisation débrayables prévus suivant l'invention entre le lien de retenue et l'organe de fermeture auquel celui-ci est associé, seule intervient alors une désolidarisation entre ce lien de retenue et cet organe de fermeture, sans que l'intégrité du lien de retenue soit par ailleurs en quoi que ce soit compromise.

Enfin, à la différence des dispositions suivant lesquelles chacun des liens de retenue mis en oeuvre est d'un seul tenant avec l'organe de fermeture auquel il est associé, un même type d'organe de fermeture peut avantageusement être prévu pour l'ensemble de la boîte, au bénéfice d'une simplification des fabrications.

Lorsque la présence d'au moins un lien de retenue est souhaitée, il suffit d'équiper, à la demande, d'un tel lien de retenue tel ou tel des organes de fermeture.

Ainsi, un même type de fabrication permet avantageusement de disposer soit d'une boîte pourvue d'au moins un lien de retenue, soit d'une boîte dépourvue de tout lien de retenue.

Les caractéristiques et avantages de l'invention ressortiront d'ailleurs de la description qui va suivre, à titre d'exemple, en référence aux dessins schématiques annexés sur lesquels :
- la figure 1 est une vue en perspective d'une boîte suivant l'invention, représentée fermée ;
- la figure 2 est une autre vue en perspective, partielle, et en partie éclatée, de cette boîte, représentée ouverte ;
- la figure 3 est, à échelle différente, une vue partielle en coupe du couvercle de cette boîte, suivant la ligne III-III de la figure 2 ;
- la figure 4 est une vue partielle de dessous de ce couvercle, suivant la flèche IV de la figure 3 ;
- la figure 5 est une vue partielle de dessus du corps de boîte de la boîte suivant l'invention, suivant la flèche V de la figure 2 ;
- la figure 6 est une vue partielle en coupe de ce corps de boîte, suivant la ligne VI-VI de la figure 5 ;
- la figure 7 est, à échelle différente, une vue en élévation d'un des organes de fermeture équipant la boîte suivant l'invention, suivant la flèche VII de la figure 2 ;
- la figure 8 est une vue en coupe axiale de cet organe de fermeture, suivant la ligne VIII-VIII de la figure 7 ;
- la figure 9 en est une vue en coupe transversale, suivant la ligne IX-IX de la figure 7 ;
- la figure 10 en est une autre vue en élévation, suivant la flèche X de la figure 2 ;
- la figure 11 en est une autre vue en coupe axiale, suivant la ligne XI-XI de la figure 10 ;
- la figure 12 est, à échelle différente, une vue en élévation d'un lien de retenue susceptible d'être mis en oeuvre dans la boîte suivant l'invention, suivant la flèche XII de la figure 2 ;
- la figure 13 est une vue en coupe transversale de ce lien de retenue, suivant la ligne XIII-XIII de la figure 12 ;
- la figure 14 est, suivant la ligne XIV-XIV de la figure 1, une vue partielle en coupe de la boîte suivant l'invention, lorsque, comme représenté sur cette figure 1, elle est fermée ;
- la figure 15 est une vue partielle en coupe analogue à celle de la figure 14, lorsque la boîte suivant l'invention est ouverte ;
- la figure 16 est une vue analogue à celle de la figure 12, pour une variante de réalisation du lien de retenue ;
- la figure 17 est une vue en coupe transversale de cette variante de réalisation, suivant la ligne XVII-XVII de la figure 16.

Tel qu'illustré sur ces figures, et de manière connue en soi, la boîte 10 suivant l'invention comporte, globalement, un corps de boîte 11, par lequel elle peut, si désiré, être assujetti à un quelconque support, un mur ou une quelconque autre paroi par exemple, un couvercle 12, qui est apte à recouvrir le corps de boîte 11, et au moins deux organes de fermeture 13, qui sont aptes à permettre de verrouiller le couvercle 12 sur le corps de boîte 11.

Dans la forme de réalisation représentée, cette boîte 10 a, en plan, un contour globalement quadrangulaire, et il est prévu un organe de fermeture 13 dans chacune de ses zones d'angle.

Ces organes de fermeture 13 sont donc au nombre de quatre.

Le corps de boîte 11 comporte, globalement, un fond 14, et, à la périphérie de ce fond 14, une paroi latérale 15, qui s'étend sensiblement perpendiculairement au fond 14.

Dans la forme de réalisation représentée, le corps de boîte 11 comporte, en outre, à son débouché, en retrait par rapport à sa paroi latérale 15, un rebord 17, qui, par des portions arrondies 18 dirigées vers l'intérieur, contourne, pour des raisons qui apparaîtront ci-après, ses zones d'angle, et qui définit globalement son débouché.

En pratique, ce rebord 17 fait saillie sur une semelle 19, qui suit, elle, le contour du corps de boîte 11, et qui s'étend parallèlement au fond 14 de celui-ci.

Corollairement, le couvercle 12 comporte, globalement, dans la forme de réalisation représentée, un panneau de façade 20, et, à la périphérie de celui-ci, un bord tombé 21, par lequel il est apte à s'engager sur le rebord 17 du corps de boîte 11.

Mais, à la différence de ce rebord 17, le bord tombé 21 du couvercle 12 suit intégralement le contour du corps de boîte 11, à l'image de la semelle 19 de celui-ci.

Les organes de fermeture 13 interviennent, chacun respectivement, à la faveur d'évidements 23 ajourant localement le panneau de façade 20 du couvercle 12, dans les zones d'angle de celui-ci.

Dans la forme de réalisation représentée, ces organes de fermeture 13 sont, à titre d'exemple, des axes quart de tour.

Autrement dit, il s'agit d'organes rotatifs n'impliquant qu'une rotation d'un quart de tour pour leur intervention.

En pratique, les axes de rotation de ces organes de fermeture 13 s'étendent sensiblement perpendiculairement au fond 14 du corps de boîte 11, et, donc, sensiblement parallèlement aux arêtes de la boîte 10.

Les organes de fermeture 13 ne relevant pas, par eux-mêmes, de la présente invention, ils ne seront pas décrits dans tous leurs détails ici.

En pratique, ils sont tous identiques entre eux, et ils comportent, globalement, chacun, une tête 24, qui est propre à leur commande en rotation, et qui est accessible en façade du couvercle 12, et un fût 25, qui, suivant des dispositions décrites plus en détail ultérieurement, traverse le couvercle 12, pour coopération avec le corps de boîte 11, avec, à mi-hauteur de ce fût 25, une collerette 26.

La tête 24 a un contour circulaire, et il en est globalement de même pour le fût 25, en retrait par rapport à la tête 24.

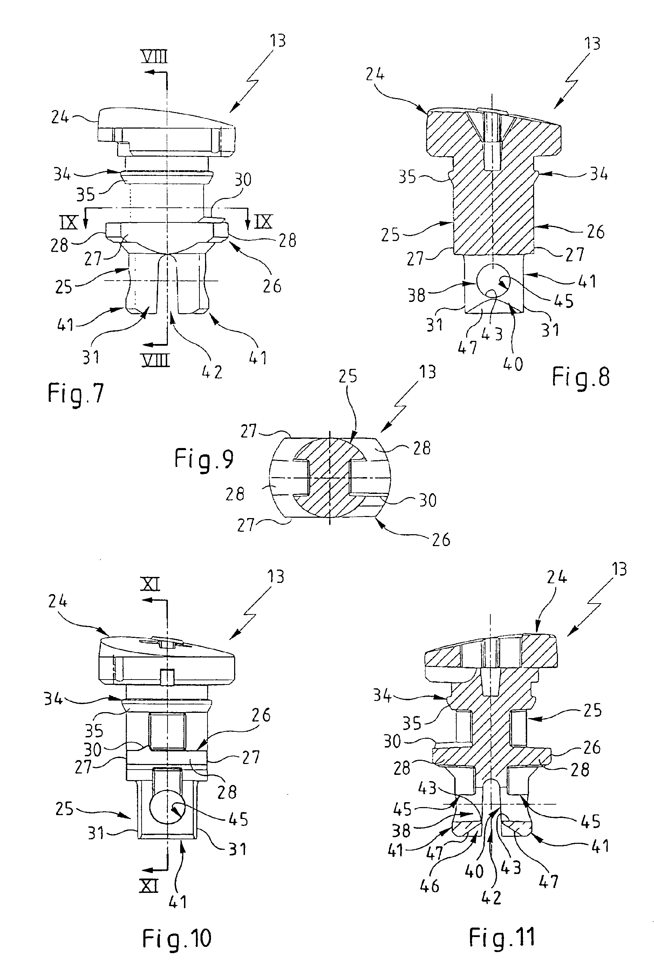

En revanche, le contour de la collerette 26, qui, pour le reste, est identique à celui de la tête 24, est tronqué, localement, par deux méplats 27 parallèles, à ras avec le fût 25, figure 9.

La collerette 26 forme ainsi deux languettes 28, qui s'étendent en directions diamétralement opposées l'une par rapport à l'autre, et dont une porte, en saillie sur sa surface supérieure, c'est-à-dire sur sa surface tournée vers la tête 24, parallèlement aux méplats 27, une nervure 30.

Le contour de la partie inférieure du fût 25, c'est-à-dire celui de la partie de ce fût 25 qui s'étend au-delà de la collerette 26 par rapport à la tête 24, est lui aussi tronqué localement par deux méplats 31, qui, parallèles aux méplats 27 de la collerette 26, s'étendent chacun respectivement en retrait par rapport à ceux-ci.

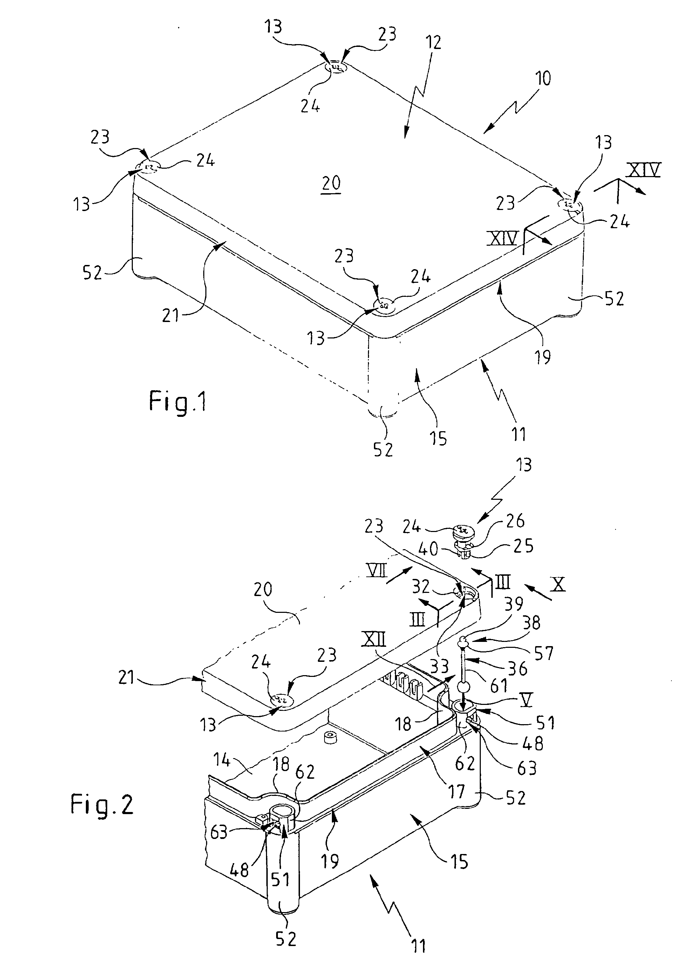

Corollairement, les évidements 23 du couvercle 12 ont, à leur partie supérieure, un contour circulaire, complémentaire de celui de la tête 24 des organes de fermeture 13, figures 1, 2 et 3.

Mais, à leur partie inférieure, ces évidements 23 comportent chacun un plancher 32 évidé d'un ajour 33 dont le contour, lui, est complémentaire de celui de la collerette 26 de ces organes de fermeture 13.

Il en résulte qu'un organe de fermeture 13 ne peut être engagé dans un évidement 23 du couvercle 12 que pour autant que sa collerette 26 se présente exactement au droit de l'ajour 33 du plancher 32 de celui-ci, et que, s'il est ensuite pivoté autour de son axe de rotation par rapport à cette position d'engagement, il ne peut plus être dégagé de cet évidement 23.

En pratique, figures 7 à 11, chacun des organes de fermeture 13 présente, en saillie, annulairement, sur son fût 25, entre sa tête 24 et sa collerette 26, à une distance de la surface de la tête 24 sensiblement égale à l'épaisseur du plancher 32 des évidements 23 du couvercle 12, un bourrelet 34 propre à son maintien en position sur le couvercle 12.

Préférentiellement, et tel que représenté, la surface inférieure de ce bourrelet 34, c'est-à-dire la surface de ce bourrelet 34 tournée vers la collerette 26, est biseautée par un chanfrein tronconique 35, pour faciliter un passage à force à travers l'ajour 33 du plancher 32 de l'évidement 23 correspondant du couvercle 12.

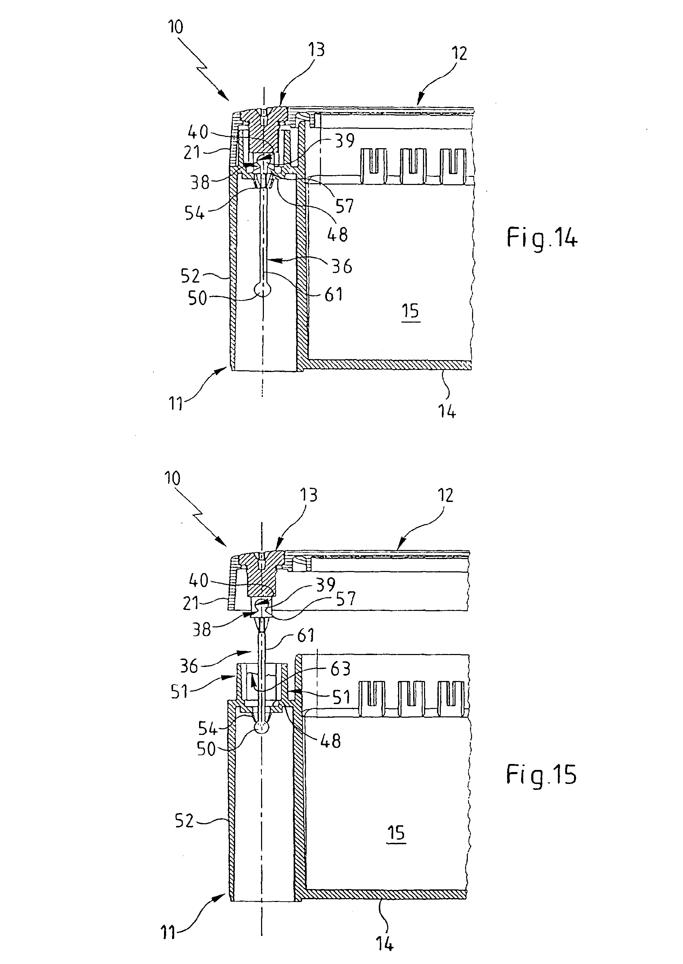

De manière connue en soi, enfin, à l'un au moins des organes de fermeture 13 est associé un lien de retenue 36 apte à assurer une retenue du couvercle 12 à distance du corps de boîte 11, comme représenté sur la figure 15.

Dans la forme de réalisation représentée, il n'est associé un tel lien de retenue 36 qu'à deux des organes de fermeture 13.

Il s'agit, en pratique, de deux organes de fermeture 13 adjacents.

Par exemple, le côté de la boîte 10 aux extrémités duquel interviennent ces deux organes de fermeture 13 est supposé devoir être le côté inférieur de cette boîte 10 lorsque celle-ci est implantée sur son support.

Ainsi, le couvercle 12 peut pendre librement en dessous du corps de boîte 11 lorsque la boîte 10 est ouverte.

En pratique, les deux liens de retenue 36 mis en oeuvre sont identiques l'un à l'autre.

Seul donc l'un d'eux sera décrit dans ce qui suit.

Suivant l'invention, ce lien de retenue 36 équipe à demeure le corps de boîte 11, avec, entre lui et l'organe de fermeture 13 auquel il est associé, des moyens de solidarisation débrayables 38.

Dans les formes de réalisation représentées, les moyens de solidarisation débrayables 38 intervenant ainsi entre le lien de retenue 36 et l'organe de fermeture 13 auquel il est associé sont des moyens d'encliquetage.

Plus précisément, ils comportent deux éléments d'encliquetage 39, 40 complémentaires, l'un sur le lien de retenue 36, l'autre sur l'organe de fermeture 13.

Dans les formes de réalisation représentées, l'élément d'encliquetage 39 du lien de retenue 36 est une tête, qui est en saillie sur celui-ci, et l'élément d'encliquetage 40 de l'organe de fermeture 13 est un logement, qui, en creux sur ce dernier, est ouvert en direction du lien de retenue 36.

En pratique, la tête formant l'élément d'encliquetage 39 du lien de retenue 36 intervient axialement au sommet de celui-ci, et, corollairement, le logement formant l'élément d'encliquetage 40 de l'organe de fermeture 13 associé intervient axialement à la base de ce dernier.

Préférentiellement, et cela est le cas dans les formes de réalisation représentées, une capacité de déformation élastique intervient entre la tête formant l'élément d'encliquetage 39 du lien de retenue 36 et le logement formant l'élément d'encliquetage 40 de l'organe de fermeture 13 correspondant.

Par exemple, et tel que représenté, la tête formant l'élément d'encliquetage 39 du lien de retenue 36 est pleine, et le logement formant l'élément d'encliquetage 40 de l'organe de fermeture 13 correspondant est élastiquement déformable radialement.

Dans les formes de réalisation représentées, la tête formant l'élément d'encliquetage 39 du lien de retenue 36 est globalement sphérique.

Corollairement, sur une partie au moins de sa hauteur à compter de sa base, l'organe de fermeture 13 associé est fractionné axialement en au moins deux jambages 41, qui définissent entre eux le logement formant son élément d'encliquetage 40, figures 7 à 11.

Autrement dit, la partie inférieure du fût 25 de l'organe de fermeture 13, présente en dessous de la collerette 26 de celui-ci, est fractionnée axialement en au moins deux jambages 41 par une fente 42.

Par exemple, et tel que représenté, seuls deux jambages 41 sont prévus, et la fente 42 correspondante s'étend sensiblement perpendiculairement aux méplats 31 de cette partie inférieure du fût 25 de l'organe de fermeture 13.

Dans la forme de réalisation représentée, pour la définition du logement formant son élément d'encliquetage 40, chacun des jambages 41 de l'organe de fermeture 13 présente, en creux sur sa surface intérieure, à un même niveau pour tous, un évidement 43.

Par exemple, et tel que représenté, l'évidement 43 ainsi présent en creux sur la surface intérieure des jambages 41 de l'organe de fermeture 13 est formé par l'extrémité d'un perçage 45 traversant transversalement de part en part chacun de ces jambages 41.

Préférentiellement, pour y faciliter la pénétration de la tête formant l'élément d'encliquetage 39 du lien de retenue 36, le logement formant l'élément d'encliquetage 40 de l'organe de fermeture 13 est précédé par un convergent d'engagement 46.

Dans la forme de réalisation représentée, ce convergent d'engagement 46 est formé par deux chanfreins 47 biseautant chacun respectivement la surface intérieure des deux jambages 41 de l'organe de fermeture 13 à la base de ces jambages 41.

Dans les formes de réalisation représentées, le lien de retenue 36 suivant l'invention traverse une platine 48 du corps de boîte 11 à la faveur d'une ouverture 49 prévue à cet effet dans celle-ci, et il présente, du côté intérieur du corps de boîte 11, un élément de retenue 50 ayant transversalement une dimension qui, au moins localement, est supérieure à la dimension correspondante de cette ouverture 49.

En pratique, la platine 48 du corps de boîte 11 s'étend au fond d'un puits 51, qui, destiné au guidage et à l'intervention de l'organe de fermeture 13, fait saillie sur la semelle 19 du corps de boîte 11, à l'extérieur du volume délimité par le rebord 17 de celui-ci, au droit de la portion arrondie 18 correspondante de ce rebord 17.

Chacun des organes de fermeture 13 pouvant à la demande être équipé d'un lien de retenue 36, il est prévu un tel puits 51 dans chacune des zones d'angle du corps de boîte 11, et, au-delà de sa semelle 19, le corps de boîte 11 présente, à l'aplomb de ce puits 51, suivant son arête correspondante, une cheminée 52 propre au débattement d'un lien de retenue 36.

Dans la forme de réalisation représentée, la platine 48 présente au fond d'un puits 51 est légèrement en retrait par rapport à la semelle 19 du corps de boîte 11.

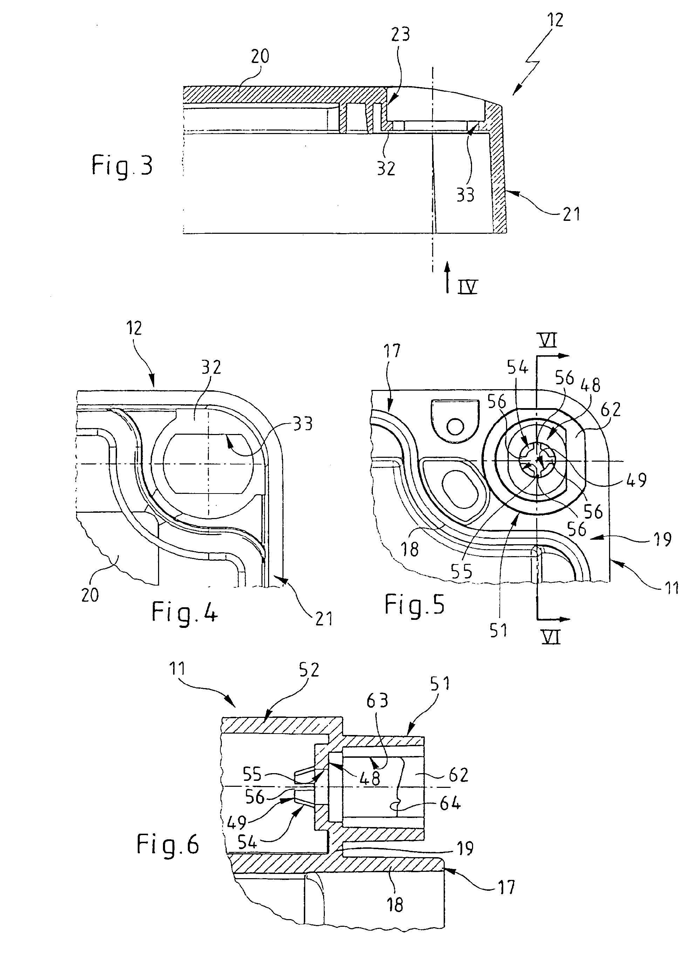

En outre, dans cette forme de réalisation, figures 5 et 6, l'ouverture 49 que présente cette platine 48 pour sa traversée par le lien de retenue 36 est formée par un diaphragme 54, qui, d'une part, s'étend à compter d'un passage 55 de cette platine 48 ayant, au moins localement, une dimension supérieure à la dimension correspondante de l'élément de retenue 50 du lien de retenue 36, et qui, d'autre part, est élastiquement déformable, pour permettre l'engagement de cet élément de retenue 50 lors de la mise en place du lien de retenue 36.

Dans la forme de réalisation représentée, le diaphragme 54 est globalement tronconique, et il s'étend du côté intérieur du corps de boîte 11.

En pratique, pour présenter une capacité de déformation élastique, le diaphragme 54 est fractionné radialement par des fentes 56.

Préférentiellement, et cela est le cas dans les formes de réalisation représentées, le lien de retenue 36 suivant l'invention présente, du côté extérieur du corps de boîte 11, à distance de son élément de retenue 50, une garde 57 par laquelle il est apte à porter sur la platine 48 correspondante de ce corps de boîte 11.

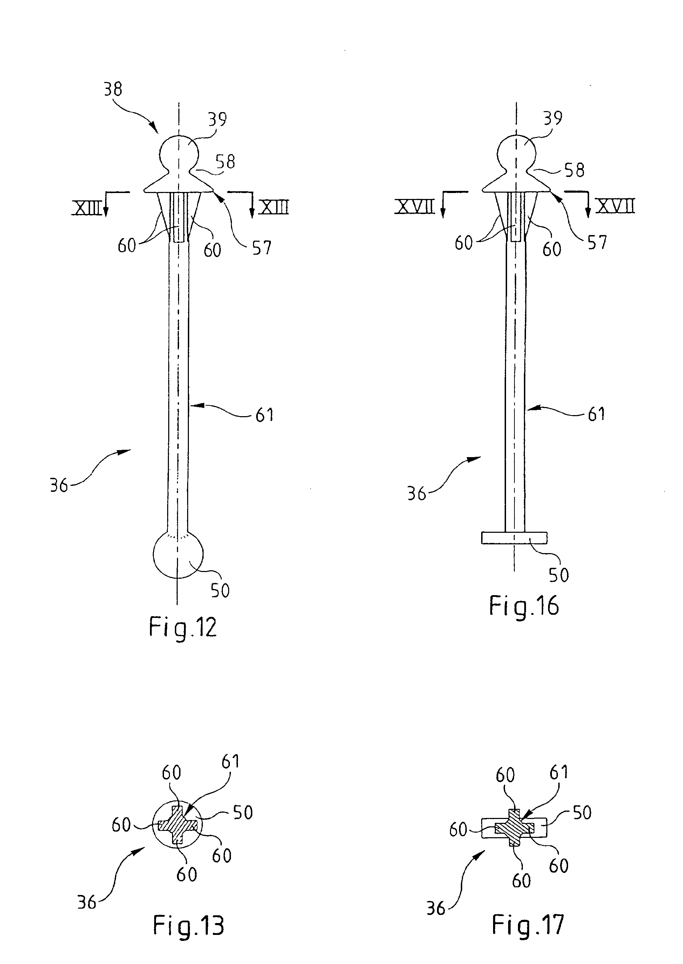

Par exemple, et tel que représenté, la garde 57 du lien de retenue 36 est une collerette, qui entoure radialement celui-ci, et sur laquelle fait saillie son élément d'encliquetage 39, en formant un col 58 avec ce dernier, figure 12.

Dans les formes de réalisation représentées, la surface supérieure de la garde 57 du lien de retenue 36, c'est-à-dire la surface de cette garde 57 tournée vers l'élément d'encliquetage 39, est tronconique.

Corollairement, la surface inférieure de cette garde 57, c'est-à-dire la surface de celle-ci tournée vers l'élément de retenue 50, est plane.

Préférentiellement, et cela est le cas dans les formes de réalisation représentées, des nervures de raidissement 60 et de guidage dans le passage 55 font saillie sur la surface inférieure de la garde 57 du lien de retenue 36.

En pratique, le lien de retenue 36 présentant, entre sa garde 57 et son élément de retenue 50, une tige 61, les nervures de raidissement 60 s'étendent en triangle entre la garde 57 et cette tige 61.

Par exemple, et tel que représenté, quatre nervures de raidissement 60 sont ainsi prévues en croix autour de la tige 61.

Dans les formes de réalisation représentées, la tige 61 du lien de retenue 36 est cylindrique, et sa section transversale est globalement circulaire.

Préférentiellement, cette tige 61 est souple.

Préférentiellement, également, le lien de retenue 36 suivant l'invention est d'un seul tenant, en formant de moulage une seule et même pièce.

Par exemple ce lien de retenue 36 est réalisé en matière synthétique.

En pratique, l'élément de retenue 50 du lien de retenue 36 suivant l'invention intervient axialement en bout de sa tige 61.

Dans la forme de réalisation plus particulièrement représentée sur les figures 1 à 15, cet élément de retenue 50 est globalement sphérique.

En variante, figures 7 et 17, il forme globalement une traverse, perpendiculairement à la tige 61.

Par ailleurs, dans les formes de réalisation représentées, lorsque, comme en l'espèce, les organes de fermeture 13 mis en oeuvre sont des axes quart de tour, chacun des puits 51 que comporte le corps de boîte 11 présente, intérieurement, en creux sur sa paroi latérale 62, un évidement 63 propre à l'intervention d'un tel axe quart de tour.

Cet évidement 63 doit donc avoir une profondeur propre à permettre l'engagement de l'une ou l'autre des languettes 28 formées par la collerette 26 des organes de fermeture 13, et, plus précisément, celle de ces languettes 28 qui porte une nervure 30.

En pratique, dans la forme de réalisation représentée, l'évidement 63 débouche latéralement à l'extérieur, en traversant de part en part la paroi latérale 62 du puits 51.

En outre, cet évidement 63 intervient sur une partie de cette paroi latérale 62 qui, tournée vers l'extérieur, s'étend de manière rectiligne, parallèlement à l'un des côtés du corps de boîte 11, en tronquant ainsi localement le contour du puits 51.

Enfin, celui des bords de cet évidement 63 qui est le plus éloigné par rapport à la semelle 19 du corps de boîte 11 présente, localement, une encoche 64, pour coopération en emboîtement avec la nervure 30 prévue à cet effet en saillie sur l'une des languettes 28 des organes de fermeture 13, en permettant ainsi une indexation d'un tel organe de fermeture 13 dans le puits 51 correspondant.

Au montage, le couvercle 12 est systématiquement équipé de quatre organes de fermeture 13, suivant les dispositions précisées antérieurement.

Lorsque le couvercle 12 ainsi équipé de ces organes de fermeture 13 est rapporté sur le corps de boîte 11, ces organes de fermeture 13 doivent être dans une orientation par rapport à leur axe de rotation propre à permettre leur engagement dans les puits 51 du corps de boîte 11 eu égard à la partie rectiligne de la paroi latérale 62 de ceux-ci.

Suivant des dispositions qui, ne relevant pas de la présente invention, ne seront pas décrites ici, les moyens de repérage et/ou d'indexation sont prévus à cet effet entre ces organes de fermeture 13 et le couvercle 12.

Il suffit, ensuite, de faire tourner d'un quart de tour les organes de fermeture 13 autour de leur axe de rotation pour que celle de leurs languettes 28 qui est pourvue d'une nervure 30 s'engage dans l'évidement 63 du puits 51 correspondant du corps de boîte 11, en venant ainsi verrouiller le couvercle 12 sur ce dernier.

Lorsqu'un ou plusieurs liens de retenue 36 sont prévus, ce ou ces liens de retenue 36 sont rapportés par avance sur le corps de boîte 11.

Il suffit, pour ce faire, d'engager chacun de ces liens de retenue 36 par son élément de retenue 50 dans le puits 51 correspondant du corps de boîte 11, en forçant cet élément de retenue 50 à travers l'ouverture 49 de la platine 48 correspondante de ce dernier.

Une fois ainsi mis en place, chacun des liens de retenue 36 mis en oeuvre est empêché d'échapper au corps de boîte 11, son élément de retenue 50 venant au mieux buter contre la platine 48, autour de l'ouverture 49 de celle-ci.

Corollairement, lors de la mise en place du couvercle 12 sur le corps de boîte 11, chacun de ces liens de retenue 36 est refoulé en direction de l'intérieur du corps de boîte 11 par l'organe de fermeture 13 auquel il est associé, jusqu'à ce que, sa garde 57 venant porter sur la platine 48 correspondante de ce corps de boîte 11, il soit empêché de pénétrer plus avant dans celui-ci.

Le mouvement de la mise en place du couvercle 12 sur le corps de boîte 11 étant poursuivi, l'encliquetage prévu suivant l'invention entre un tel lien de retenue 36 et l'organe de fermeture 13 auquel il est associé intervient alors systématiquement, par engagement à force de l'élément d'encliquetage 39 de ce lien de retenue 36 dans l'élément d'encliquetage 40 de l'organe de fermeture 13, à la faveur d'une déformation élastique temporaire de ce dernier.

L'élément d'encliquetage 39 du lien de retenue 36 étant de révolution, son orientation angulaire, et donc celle de ce lien de retenue 36 dans son ensemble, par rapport à la tige 61, est, lors de ce processus d'encliquetage automatique, indifférente.

Le couvercle 12 est alors attelé au corps de boîte 11.

Mais, si désiré, une dépose complète de ce couvercle 12 est possible.

Il suffit, pour cela, de désolidariser le ou les liens de retenue 36 mis en oeuvre par rapport aux organes de fermeture 13 auxquels ils sont associés.

Bien entendu, la présente invention ne se limite pas aux formes de réalisation décrites et représentées, mais englobe toute variante d'exécution, notamment en ce qui concerne la nature et la constitution des moyens de solidarisation débrayables intervenant entre un lien de retenue et l'organe de fermeture auquel celui-ci est associé, et/ou celles de l'élément de retenue que comporte un tel lien de retenue.

En particulier, lorsque, suivant une forme de réalisation envisagée, cet élément de retenue est une traverse, les deux bras constitutifs de cette traverse peuvent s'étendre en oblique par rapport à la tige correspondante, à la manière des barbelures d'un harpon, au lieu de s'étendre perpendiculairement par rapport à cette tige comme plus particulièrement décrit et représenté.

Il résulte en outre de ce qui précède que, par lien de retenue équipant "à demeure" le corps de boîte de la boîte suivant l'invention, il faut entendre un lien de retenue qui, lorsqu'il est en service, est simplement prisonnier de ce corps de boîte.

Mais cela n'implique pas qu'il ne puisse pas en être retiré si désiré.

Au contraire, le lien de retenue suivant l'invention peut être déposé si cela est souhaité.

Il suffit, pour ce faire, de faire à nouveau franchir à force la platine correspondante du corps de boîte par son élément de retenue, suivant un mouvement de dégagement inverse du mouvement d'engagement ayant conduit à sa mise en place.

## Revendications

1. Boîte du genre comportant un corps de boîte (11), un couvercle (12) et au moins deux organes de fermeture (13), qui sont aptes à permettre de verrouiller le couvercle (12) sur le corps de boîte (11), et à l'un au moins desquels est associé un lien de retenue (36) apte à assurer une retenue du couvercle (12) à distance du corps de boîte (11), **caractérisée en ce que** le lien de retenue (36) équipe à demeure le corps de boîte (11), avec, entre le lien de retenue (36) et l'organe de fermeture (13) auquel le lien de retenue (36) est associé, des moyens de solidarisation débrayables (38).

2. Boîte suivant la revendication 1, **caractérisée en ce que** les moyens de solidarisation débrayables (38) intervenant entre le lien de retenue (36) et l'organe de fermeture (13) auquel il est associé, sont des moyens d'encliquetage.

3. Boîte suivant la revendication 2, **caractérisée en ce que** les moyens de solidarisation débrayables (38) intervenant entre le lien de retenue (36) et l'organe de fermeture (13) auquel il est associé comportent deux éléments d'encliquetage (39, 40) complémentaires, l'un sur le lien de retenue (36), l'autre sur l'organe de fermeture (13).

4. Boîte suivant la revendication 3, **caractérisée en ce que** l'élément d'encliquetage (39) du lien de retenue (36) est une tête qui est en saillie sur 20 celui-ci, et l'élément d'encliquetage (40) de l'organe de fermeture (13) est un logement, qui, en creux sur ce dernier, est ouvert en direction du lien de retenue (36).

5. Boîte suivant la revendication 4, **caractérisée en ce que** la tête formant l'élément d'encliquetage (39) du lien de retenue (36) est pleine, et le logement formant l'élément d'encliquetage (40) de l'organe de fermeture (13) est élastiquement déformable radialement.

6. Boîte suivant l'une quelconque des revendications 4, 5, **caractérisée en ce que** la tête formant l'élément d'encliquetage (39) du lien de retenue (36) intervient axialement en sommet de celui-ci.

7. Boîte suivant l'une quelconque des revendications 4 à 6, **caractérisée en ce que** la tête formant l'élément d'encliquetage (39) du lien de retenue (36) est globalement sphérique.

8. Boîte suivant l'une quelconque des revendications 4 à 7, **caractérisée en ce que** le logement formant l'élément d'encliquetage (40) de l'organe de fermeture (13) intervient axialement à la base de ce dernier.

9. Boîte suivant les revendications 5 et 8, prises conjointement, **caractérisée en ce que**, sur une partie au moins de sa hauteur à compter de sa base, l'organe de fermeture (13) est fractionné axialement en au moins deux jambages (41), qui définissent entre eux le logement formant son élément d'encliquetage (40).

10. Boîte suivant la revendication 9, **caractérisée en ce que**, pour la définition du logement formant son élément d'encliquetage (40), chacun des jambages (41) de l'organe de fermeture (13) présente, en creux sur sa surface intérieure, à un même niveau pour tous, un évidement (43).

11. Boîte suivant la revendication 10, **caractérisée en ce que** l'évidement (43) présent en creux sur la surface intérieure des jambages (41) de l'organe de fermeture (13) est formé par l'extrémité d'un perçage (45) traversant transversalement de part en part chacun de ces jambages (41).

12. Boîte suivant l'une quelconque des revendications 4 à 11, **caractérisée en ce que** le logement formant l'élément d'encliquetage (40) de l'organe de fermeture (13) est précédé par un convergent d'engagement (46).

13. Boîte suivant l'une quelconque des revendications 3 à 12, **caractérisée en ce que** le lien de retenue (36) traverse une platine (48) du corps de boîte (11) à la faveur d'une ouverture (49) prévue à cet effet dans celle-ci, et il présente, du côté intérieur du corps de boîte (11), un élément de retenue (50) ayant transversalement une dimension qui, au moins localement, est supérieure à la dimension correspondante de cette ouverture (49).

14. Boîte suivant la revendication 13, **caractérisée en ce que** le lien de retenue (36) présente, du côté extérieur du corps de boîte (11), à distance de son élément de retenue (50), une garde (57) par laquelle il est apte à porter sur la platine (48) du corps de boîte (11).

15. Boîte suivant la revendication 14, **caractérisée en ce que** la garde (57) du lien de retenue (36) est une collerette, qui entoure radialement celui-ci, et sur laquelle fait saillie son élément d'encliquetage (39), en formant un col (58) avec ce dernier.

16. Boîte suivant l'une quelconque des revendications 14, 15, **caractérisé en ce que** la surface supérieure de la garde (57) du lien de retenue (36) est tronconique.

17. Boîte suivant l'une quelconque des revendications 14 à 16, **caractérisée en ce que** la surface inférieure de la garde (57) du lien de retenue (36) est plane.

18. Boîte suivant la revendication 17, **caractérisée en ce que** des nervures de raidissement (60) font saillie sur la surface inférieure de la garde (57) du lien de retenue (36).

19. Boîte suivant l'une quelconque des revendications 13 à 18, **caractérisée en ce que** l'ouverture (49) de la platine (48) du corps de boîte (11) est formée par un diaphragme (54), qui, d'une part, s'étend à compter d'un passage (55) de cette platine (48) ayant, au moins localement, une dimension supérieure à la dimension correspondante de l'élément de retenue (50) du lien de retenue (36), et qui, d'autre part, est élastiquement déformable.

20. Boîte suivant la revendication 19, **caractérisée en ce que** le diaphragme (54) est globalement tronconique, et il s'étend du côté intérieur du corps de boîte (11).

21. Boîte suivant l'une quelconque des revendications 19, 20, **caractérisée en ce que** le diaphragme (54) est fractionné radialement par des fentes (56).

22. Boîte suivant l'une quelconque des revendications 13 à 21, **caractérisée en ce que** l'organe de fermeture (13) est un axe quart de tour, et la platine (48) du corps de boîte (11) s'étend au fond d'un puits (51).

23. Boîte suivant la revendication 22, **caractérisée en ce que** le puits (51) du corps de boîte (11) présente, intérieurement, en creux sur sa paroi latérale (62), un évidement (63) propre à l'intervention de l'axe quart de tour que forme l'organe de fermeture (13) correspondant.

24. Boîte suivant la revendication 21, **caractérisée en ce que** l'évidement (63) de la paroi latérale (62) du puits (51) du corps de boîte (11) débouche latéralement à l'extérieur.

25. Boîte suivant l'une quelconque des revendications 13 à 24, **caractérisée en ce que** l'élément de retenue (50) du lien de retenue (36) est globalement sphérique.

26. Boîte suivant l'une quelconque des revendications 13 à 24, **caractérisée en ce que** l'élément de retenue (50) du lien de retenue (36) forme globalement une traverse.

## Claims

1. A box of the kind comprising a box body (11), a cover (12) and at least two closure members (13) which are capable of permitting the cover (12) to be locked on the box body (11) and with one at least of which there is associated a retaining connector (36) capable of ensuring retention of the cover (12) at a spacing from the box body (11), **characterised in that** the retaining connector (36) is permanently fitted to the box body (11) with, between the retaining connector (36) and the closure member (13) with which the retaining connector (36) is associated, disengageable fixing means (38).

2. A box according to claim 1 **characterised in that** the disengageable fixing means (38) operative between the retaining connector (36) and the closure member (13) with which it is associated are latching means.

3. A box according to claim 2 **characterised in that** the disengageable fixing means (38) operative between the retaining connector (36) and the closure member (13) with which it is associated comprise two complementary latching elements (39, 40), one on the retaining connector (36) and the other on the closure member (13).

4. A box according to claim 3 **characterised in that** the latching element (39) of the retaining connector (36) is a head which is in projecting relationship thereon and the latching element (40) of the closure member (13) is a housing which, in recessed relationship on the latter, is open in the direction of the retaining connector (36).

5. A box according to claim 4 **characterised in that** the head forming the latching element (39) of the retaining connector (36) is solid and the housing forming the latching element (40) of the closure member (13) is radially elastically deformable.

6. A box according to either one of claims 4 and 5 **characterised in that** the head forming the latching element (39) of the retaining connector (36) is disposed axially at the top thereof.

7. A box according to any one of claims 4 to 6 **characterised in that** the head forming the latching element (39) of the retaining connector (36) is spherical overall.

8. A box according to any one of claims 4 to 7 **characterised in that** the housing forming the latching element (40) of the closure element (13) is disposed axially at the base of the latter.

9. A box according to claims 5 and 8 in combination **characterised in that**, over a part at least of its height from its base, the closure member (13) is axially divided into at least two leg portions (41) which between them define the housing forming its latching element (40).

10. A box according to claim 9 **characterised in that**, for defining the housing forming its latching element (40), each of the leg portions (41) of the closure member (13) has an opening (43) in recessed relationship on its internal surface, at the same level for all.

11. A box according to claim 10 **characterised in that** the opening (43) in recessed relationship on the internal surface of the leg portions (41) of the closure member (13) is formed by the end of a bore (45) transversely passing through each of those leg portions (41) from one side to the other.

12. A box according to any one of claims 4 to 11 **characterised in that** the housing forming the latching element (40) of the closure member (13) is preceded by a converging engagement configuration (46).

13. A box according to any one of claims 3 to 12 **characterised in that** the retaining connector (36) passes through a plate portion (48) of the box body (11) by way of an opening (49) provided for that purpose therein and on the inward side of the box body (11) it has a retaining element (50) which transversely is of a dimension which at least locally is greater than the corresponding dimension of said opening (49).

14. A box according to claim 13 **characterised in that** on the outward side of the box body (11) at a spacing from its retaining element (50) the retaining connector (36) has a guard (57) by way of which it is capable of bearing against the plate portion (48) of the box body (11).

15. A box according to claim 14 **characterised in that** the guard (57) of the retaining connector (36) is a collar portion which radially surrounds it and on which its latching element (39) is disposed in projecting relationship, forming a neck (58) with the latching element.

16. A box according to either one of claims 14 and 15 **characterised in that** the upper surface of the guard (57) of the retaining connector (36) is frustoconical.

17. A box according to any one of claims 14 to 16 **characterised in that** the internal surface of the guard (57) of the retaining connector (36) is flat.

18. A box according to claim 17 **characterised in that** stiffening ribs (60) project on the lower surface of the guard (57) of the retaining connector (36).

19. A box according to any one of claims 13 to 18 **characterised in that** the opening (49) in the plate portion (48) of the box body (11) is formed by a diaphragm (54) which on the one hand extends from a passage (55) in said plate portion (48) which at least locally is of a dimension greater than the corresponding dimension of the retaining element (50) of the retaining connector (36) and which on the other hand is elastically deformable.

20. A box according to claim 19 **characterised in that** the diaphragm (54) is generally frustoconical and it extends on the inward side of the box body (11).

21. A box according to either one of claims 19 and 20 **characterised in that** the diaphragm (54) is radially divided by slits (56).

22. A box according to any one of claims 13 to 21 **characterised in that** the closure member (13) is a quarter-turn spindle and the plate portion (48) of the box body (11) extends at the bottom of a well (51).

23. A box according to claim 22 **characterised in that** the well (51) of the box body (11) internally comprises in recessed relationship in its lateral wall (62) an opening (63) for the operative involvement of the quarter-turn spindle that is formed by the corresponding closure member (13).

24. A box according to claim 21 **characterised in that** the opening (63) in the lateral wall (62) of the well (51) of the box body (11) opens laterally to the exterior.

25. A box according to any one of claims 13 to 24 **characterised in that** the retaining element (50) of the retaining connector (36) is spherical overall.

26. A box according to any one of claims 13 to 24 **characterised in that** the retaining element (50) of the retaining connector (36) overall forms a transverse portion.

## Patentansprüche

1. Gehäuse der Art mit einem Gehäusekorpus (11), einem Deckel (12) und wenigstens zwei Verschlussorganen (13), die zum Verriegeln des Deckels (12) auf dem Gehäusekorpus (11) geeignet sind, und denen wenigstens einem von ihnen eine Halteverbindung (38) zugeordnet ist, die den Deckel (12) vom Gehäusekorpus (11) beabstandet zu halten vermag,
**dadurch gekennzeichnet, dass** die Halteverbindung (36) dauerhaft am Gehäusekorpus (11) angebracht ist, mit lösbaren Verbindungsmitteln (38) zwischen der Halteverbindung (36) und dem Verschlussorgan (13), dem die Halteverbindung (36) zugeordnet ist.

2. Gehäuse nach Anspruch 1,
**dadurch gekennzeichnet, dass** die lösbaren Verbindungsmittel (38), die zwischen der Halteverbindung (36) und dem Verschlussorgan (13), dem diese zugeordnet ist, wirken, Rastmittel sind.

3. Gehäuse nach Anspruch 2,
**dadurch gekennzeichnet, dass** die lösbaren Verbindungsmittel (38), die zwischen der Halteverbindung (38) und dem Verschlussorgan (13), dem diese zugeordnet ist, wirken, zwei komplementäre Rastelemente (39, 40) umfassen, eines an der Halteverbindung (38), das andere am Verschlussorgan (13).

4. Gehäuse nach Anspruch 3,
**dadurch gekennzeichnet, dass** das Rastelement (39) der Halteverbindung (36) ein Kopf ist, der an dieser vorsteht, und das Rastelement (40) des Verschlussorgans (13) eine Aufnahme ist, die in diesem vertieft in Richtung der Halteverbindung (36) offen ist.

5. Gehäuse nach Anspruch 4,
**dadurch gekennzeichnet, dass** der das Rastelement (39) der Halteverbindung (36) bildende Kopf massiv ist und die das Rastelement (40) des Verschlussorgans (13) bildende Aufnahme radial elastisch verformbar ist.

6. Gehäuse nach einem der Ansprüche 4, 5,
**dadurch gekennzeichnet, dass** der das Rastelement (39) der Halteverbindung (36) bildende Kopf axial an deren Spitze wirkt.

7. Gehäuse nach einem der Ansprüche 4 bis 6,
**dadurch gekennzeichnet, dass** der das Rastelement (39) der Halteverbindung (36) bildende Kopf allgemein kugelförmig ist.

8. Gehäuse nach einem der Ansprüche 4 bis 7,
**dadurch gekennzeichnet, dass** die das Rastelement (40) des Verschlussorgans (13) bildende Aufnahme axial an dessen Basis wirkt.

9. Gehäuse nach den Ansprüchen 5 und 8 in Verbindung miteinander,
**dadurch gekennzeichnet, dass** das Verschlussorgan (13) von seiner Basis ausgehend über wenigstens einen Teil seiner Höhe axial in wenigstens in zwei Streben (41) geteilt ist, die zusammen die Aufnahme definieren, welche das Rastelement (40) bildet.

10. Gehäuse nach Anspruch 9,
**dadurch gekennzeichnet, dass** jede der Streben (41) des Verschlussorgans (13) zum Definieren der das Rastelement (40) bildenden Aufnahme auf ihrer Innenseite vertieft bei allen in gleicher Höhe eine Aussparung (43) aufweist.

11. Gehäuse nach Anspruch 10,
**dadurch gekennzeichnet, dass** die auf der Innenseite der Streben (41) des Verschlussorgans (13) vertieft vorhandene Aussparung (43) durch das Ende einer Bohrung (45) gebildet ist, die jede der Streben (41) quer verlaufend vollständig durchquert.

12. Gehäuse nach einem der Ansprüche 4 bis 11,
**dadurch gekennzeichnet, dass** vor der Aufnahme, die das Rastelement (40) des Verschlussorgans (13) bildet, eine Eingriffszuführung (46) angeordnet ist.

13. Gehäuse nach einem der Ansprüche 3 bis 12,
**dadurch gekennzeichnet, dass** die Halteverbindung (36) eine Platte (48) des Gehäusekorpus (11) mit Hilfe einer Öffnung (49) durchquert, die hierzu in dieser vorgesehen ist, und innerhalb des Gehäusekorpus (11) ein Halteelement (50) aufweist, das quer eine Abmessung hat, die wenigstens stellenweise größer als die entsprechende Abmessung dieser Öffnung (49) ist.

14. Gehäuse nach Anspruch 13,
**dadurch gekennzeichnet, dass** die Halteverbindung (36) außerhalb des Gehäusekorpus (11) von ihrem Halteelement (50) beabstandet eine Sicherung (57) aufweist, durch die sie auf der Platte (48) des Gehäusekorpus (11) gehalten zu werden vermag.

15. Gehäuse nach Anspruch 14,
**dadurch gekennzeichnet, dass** die Sicherung (57) der Halteverbindung (36) ein Kragen ist, der diese radial umgibt und an dem deren Rastelement (39) vorsteht und hierbei mit diesem einen Hals (58) bildet.

16. Gehäuse nach einem der Ansprüche 14, 15,
**dadurch gekennzeichnet, dass** die Oberseite der Sicherung (57) der Halteverbindung (36) kegelstumpfförmig ist.

17. Gehäuse nach einem der Ansprüche 14 bis 16,
**dadurch gekennzeichnet, dass** die Unterseite der Sicherung (57) der Halteverbindung (36) eben ist.

18. Gehäuse nach Anspruch 17,
**dadurch gekennzeichnet, dass** an der Unterseite der Sicherung (57) der Halteverbindung (36) Versteifungsrippen (60) überstehen.

19. Gehäuse nach einem der Ansprüche 13 bis 18,
**dadurch gekennzeichnet, dass** die Öffnung (49) der Platte (48) des Gehäusekorpus (11) durch eine Scheidewand (54) gebildet ist, die einerseits von einem Durchlass (55) der Platte (48) ausgehend verläuft, dessen Maß wenigstens stellenweise größer als die entsprechende Abmessung des Halteelements (50) der Halteverbindung (36) ist, und die andererseits elastisch verformbar ist.

20. Gehäuse nach Anspruch 19,
**dadurch gekennzeichnet, dass** die Scheidewand (54) allgemein kegelstumpfförmig ist und sich innen im Gehäusekorpus (11) erstreckt.

21. Gehäuse nach einem der Ansprüche 19, 20,
**dadurch gekennzeichnet, dass** die Scheidewand (54) durch Schlitze (56) radial unterteilt ist.

22. Gehäuse nach einem der Ansprüche 13 bis 21,
**dadurch gekennzeichnet, dass** das Verschlussorgan (13) eine Vierteldrehungsachse ist und die Platte (48) des Gehäusekorpus (11) am Boden eines Schachts (51) verläuft.

23. Gehäuse nach Anspruch 22,
**dadurch gekennzeichnet, dass** der Schacht (51) des Gehäusekorpus (11) innen an seiner Seitenwand (62) vertieft eine Aussparung (63) aufweist, die zum Eingriff der Vierteldrehungsachse, die das entsprechende Verschlussorgan (13) bildet, geeignet ist.

24. Gehäuse nach Anspruch 21,
**dadurch gekennzeichnet, dass** die Aussparung (63) der Seitenwand (62) des Schachts (51) des Gehäusekorpus (11) seitlich nach außen mündet.

25. Gehäuse nach einem der Ansprüche 13 bis 24,
**dadurch gekennzeichnet, dass** das Halteelement (50) der Halteverbindung (36) allgemein kugelförmig ist.

26. Gehäuse nach einem der Ansprüche 13 bis 24,
**dadurch gekennzeichnet, dass** das Halteelement (50) der Halteverbindung (36) allgemein eine Querstrebe bildet.
